(19)

**Europäisches Patentamt**

**European Patent Office**

**Office européen des brevets**

(11) **EP 4 338 980 A1**

(12) **EUROPEAN PATENT APPLICATION**

(43) Date of publication:
**20.03.2024 Bulletin 2024/12**

(21) Application number: **23195855.4**

(22) Date of filing: **07.09.2023**

(51) International Patent Classification (IPC):
*B60C 1/00* (2006.01)  *C08L 7/00* (2006.01)
*C08L 9/06* (2006.01)

(52) Cooperative Patent Classification (CPC):
(C-Sets available)
**C08L 7/00; B60C 1/0016; C08L 9/06**      (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.09.2022  JP 2022145541**

(71) Applicant: **Sumitomo Rubber Industries, Ltd.
Kobe-shi, Hyogo 651-0072 (JP)**

(72) Inventor: **KITAMURA, Naoya
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(54) **TIRE**

(57)      It is an object of the present invention to provide a tire with improved chipping resistance. Provided is a tire comprising a tread part that comprises at least one rubber layer, wherein the rubber layer constitutes a tread surface, wherein the rubber layer is composed of a rubber composition comprising a rubber component, a filler, and a resin component, wherein the rubber component comprises 20% by mass or more of a styrene-butadiene rubber, and an isoprene-based rubber, wherein the filler comprises carbon black, and wherein T and G satisfy the following inequality (1),

$$2G - T \geq 70 \quad (1),$$

(provided that T is lower than -50),
where a glass transition temperature, in °C, of the styrene-butadiene rubber is referred to as T and a thickness, in mm, of the rubber layer is referred to as G.

EP 4 338 980 A1

(52) Cooperative Patent Classification (CPC): (Cont.)

C-Sets
**C08L 7/00, C08L 9/06, C08L 91/00, C08L 25/16,
C08L 91/08, C08K 3/04, C08K 3/36, C08K 5/548,
C08K 5/18, C08K 5/3437, C08K 5/09, C08K 3/22,
C08K 3/06, C08K 5/47, C08K 5/31;
C08L 9/06, C08L 7/00, C08L 91/00, C08L 25/16,
C08L 91/08, C08K 3/04, C08K 3/36, C08K 5/548,
C08K 5/18, C08K 5/3437, C08K 5/09, C08K 3/22,
C08K 3/06, C08K 5/47, C08K 5/31**

**Description**

TECHNICAL FIELD

The present invention relates to a tire.

BACKGROUND OF THE INVENTION

Chipping means a phenomenon where a part of a rubber forming a surface layer part of a tread peels off in a scale shape. When a vehicle to which tires are mounted runs, a surface of the tread comes into contact with a road surface. Due to the contact of the tread with the road surface, a part of the rubber of the tread surface suffers from a damage (initial crack). Due to shear deformation from the road surface during turning or sudden braking, stress concentrates at the damage. Due to development of crack originating from a forefront of the initial crack, chipping occurs.

JP 2018-188567 A discloses a tire tread composed of a rubber composition that comprises a modified natural rubber and a styrene-butadiene rubber and that is excellent in chip cut resistance.

SUMMARY OF THE INVENTION

It is an object of the present invention to provide a tire with improved chipping resistance.

The present invention relates to the following tire:

A tire comprising a tread part that comprises at least one rubber layer,
wherein the rubber layer constitutes a tread surface,
wherein the rubber layer is composed of a rubber composition comprising a rubber component, a filler, and a resin component,
wherein the rubber component comprises
20% by mass or more of a styrene-butadiene rubber, and an isoprene-based rubber,
wherein the filler comprises carbon black, and
wherein T and G satisfy the following inequality (1),

$$2G - T \geq 70 \quad (1),$$

(provided that T is lower than -50),
where a glass transition temperature, in °C, of the styrene-butadiene rubber is referred to as T and a thickness, in mm, of the rubber layer is referred to as G.

According to the present invention, a tire with improved chipping resistance can be provided.

BRIEF DESCRIPTION OF THE DRAWINGS

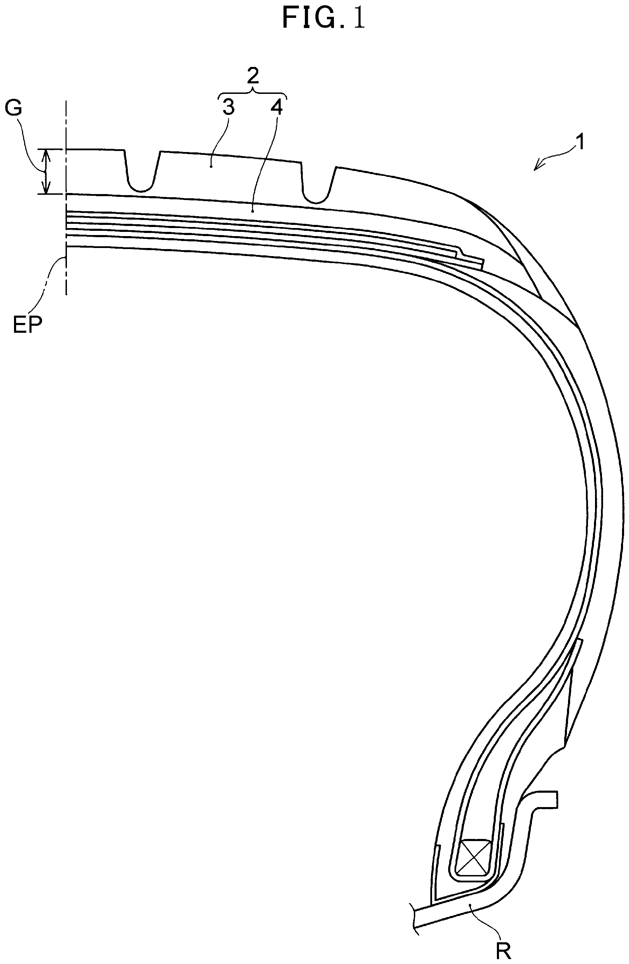

FIG. 1 is a view schematically showing a part of a cross-sectional view of a tire according to one embodiment of the present invention.

DETAILED DESCRIPTION

A tire that is one embodiment of the present invention is a tire comprising a tread part that comprises at least one rubber layer, wherein the rubber layer constitutes a tread surface, wherein the rubber layer is composed of a rubber composition comprising a rubber component, a filler, and a resin component, wherein the rubber component comprises 20% by mass or more of a styrene-butadiene rubber, and an isoprene-based rubber, wherein the filler comprises carbon black, and wherein T and G satisfy the following inequality (1),

$$2G - T \geq 70 \quad (1),$$

(provided that T is lower than -50),
where a glass transition temperature, in °C, of the styrene-butadiene rubber is referred to as T and a thickness, in mm, of the rubber layer is referred to as G.

A mechanism by which the tire of the present invention can achieve improvement in chipping resistance is considered as follows, although the following consideration is not intended to be bound by any theory.

That is, the tire of the present invention is a tire in which a rubber composition of a rubber layer constituting a tread surface comprises a rubber component, a filler, and a resin component, the rubber component comprises 20% by mass or more of a styrene-butadiene rubber (SBR) and an isoprene-based rubber (IR-based rubber), the filler comprises carbon black, and the above-described inequality (1) is satisfied. In such a tire, (1) stress concentration due to an input from a road surface is mitigated by a phaseseparation structure formed by the SBR and the IR-based rubber, (2) the resin component forms a domain in at least one phase of the SBR and the IR-based rubber, whereby stress concentration is mitigated, and (3) when the above-described inequality (1) is satisfied, a Tg of the SBR is lowered even if the rubber layer becomes thin, and thus it is considered that an input from a road surface is mitigated by enhancement of easiness of movement of the SBR phase. Additionally, with cooperation of these (1) to (3), it is considered that a higher improvement in chipping resistance is achieved.

A content of the carbon black based on 100 parts by mass of the rubber component is preferably greater than 5 parts by mass.

This is because the rubber composition is reinforced more strongly by an increase of an amount of the carbon black.

A total content of the styrene-butadiene rubber and the isoprene-based rubber in the rubber component is preferably greater than 70% by mass.

This is because such an aspect is an aspect that more exerts effects of the present invention.

A content of the resin component based on 100 parts by mass of the rubber component is preferably greater than 1 part by mass.

This is because it is considered that mitigation of stress concentration by a domain of resin is more exerted.

The filler preferably comprises silica, and a content ratio of a mass of the silica to a mass of the carbon black is preferably greater than 1.0.

This is because it is considered that, when the content ratio of the mass of the silica to the mass of the carbon black is within the above-described range, reinforcement of the SBR phase is further enhanced while ensuring reinforcing property.

A content of the filler based on 100 parts by mass of the rubber component is preferably greater than 50 parts by mass.

This is because the rubber composition is reinforced more strongly with an increasing amount of the filler.

The tread part preferably comprises three or more rubber layers.

This is because it is considered that, when the tread has three or more rubber layers, mitigation of stress concentration is exerted more.

The tire is preferably used for a passenger car.

This is because the tire of the present invention can be appropriately applied to a passenger car.

The tire is preferably used for a heavy-duty vehicle.

This is because the tire of the present invention can be appropriately applied to a heavy-duty tire.

[Definition]

Unless otherwise noted, regarding a "size or the like of each part of a tire", a size appearing on an outer surface of a tire is a value specified in a standardized state where a tire is rim-assembled to a standardized rim, filled with air at a standardized internal pressure, and applied with no load, and on the other hand, a size present on an inner side of the tire is defined as a value specified in a state where a tire is cut along a plane including a tire rotation axis and the cut piece of the tire is held at a rim width of the standardized rim.

A "standardized rim" is a rim, in a standard system including a standard on which the tire is based, defined for each tire by the standard. The standardized rim refers to, for example, a "standard rim" in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). JATMA, ETRTO, and TRA are referred to in this order, and when an applicable size is found during reference to the standard, a standardized rim is based on that standard. Additionally, if the tire is not defined in the above-described standard system, the "standardized rim" refers to a rim having the smallest rim diameter and secondly having the narrowest rim width among rims that can be rim-assembled to the tire and retain internal pressure, that is, rims that do not cause air leakage between the rim and the tire.

A "standardized internal pressure" is an air pressure, in a standard system including a standard on which the tire is based, defined for each tire by the standard. The standardized internal pressure refers to, for example, the "MAXIMUM AIR PRESSURE" in JATMA, the "maximum value" described in "INFLATION PRESSURE" in ETRTO, or the "maximum value" described in the table "TIRE LOAD LIMITS AT VARIOUS COLD INFLATION PRESSURES" in

TRA. Like the standardized rim, JATMA, ETRTO, and TRA are referred to in this order, and when an applicable size is found during reference to the standard, a standardized internal pressure is based on that standard. Besides, in a case of a tire whose size is not defined in the standard, the standardized internal pressure shall refer to a standardized internal pressure (provided that the standardized internal pressure is 250 kPa or more) for another tire size for which the standardized rim is described as a standard rim (and which is, however, defined by the standard), and in a case where a plurality of standardized internal pressures of 250 kPa or more are described, the standardized internal pressure shall refer to the minimum value among them.

A "standardized load" means a load, in a standard system including a standard on which the tire is based, defined for each tire by the standard. The standardized internal pressure refers to, for example, the "MAXIMUN LOAD CAPACITY" in JATMA, "LOAD CAPACITY" in ETRTO or the "maximum value" described in the table "TIRE LOAD LIMITS AT VARIOUS COLD INFLATION PRESSURES" in TRA. Like the standardized rim and the standardized internal pressure, JATMA, ETRTO, and TRA are referred to in this order, and when an applicable size is found during reference to the standard, a standardized load is based on that standard. Additionally, in a case of a tire whose size is not defined in the standard, the standardized load WL, in kg, is calculated as follows. Besides, in the present specification, the "MAXIMUN LOAD CAPACITY" has the same meaning as that of the standardized load,

$$V = \{(Dt/2)^2 - (Dt/2 - Ht)^2\} \times \pi \times Wt,$$

$$WL = 0.000011 \times V + 175,$$

where V represents a virtual volume of the tire, in mm$^3$, Dt represents a tire outer diameter Dt, in mm, Ht represents a tire cross-sectional height, in mm, and Wt represents a tire cross-sectional width, in mm.

A "thickness (G) of a rubber layer constituting a tread surface" is a thickness of the rubber layer measured along a normal line drawn from a tire equator. In a case where a circumferential groove is provided on a tire equatorial plane, such a thickness is a thickness for which it is recognized that the circumferential groove is filled. This thickness is measured in a state where a tire cut along a plane passing through a tire rotation axis is held by a standardized rim. A thickness of another rubber layer constituting the tread part is also measured in the same manner.

A "tire for a passenger car" refers to a tire that is presupposed to be mounted to a vehicle running with four wheels and that has a maximum load capacity of 1000 kg or less.

A "tire for a heavy-duty vehicle" refers to a tire that is presupposed to be mounted not only to a large truck and a large bus but also to a small truck (light truck), a small bus, and the like and that has a maximum load capacity of greater than 1000 kg. Here, examples of the light truck include a SUV, a van (large conventional van and minivan), a pickup truck, and the like.

[Measuring method]

A "styrene content" is calculated by $^1$H-NMR measurement.

A "vinyl content (1,2-bond butadiene unit amount)" is calculated according to JIS K 6239-2:2017 by an infrared absorption spectrometry.

A "cis content (cis-1,4-bond butadiene unit amount)" is calculated according to JIS K 6239-2:2017 by an infrared absorption spectrometry.

A "glass transition temperature (Tg)" is measured by making a measurement according to JIS K 7121 using a differential scanning calorimeter (Q200) manufactured by TA Instruments Japan Inc. while increasing a temperature at a temperature rising rate of 10°C/min. In the present invention, particularly, a Tg of a styrene-butadiene rubber is measured. In a case where two or more types of styrene-butadiene rubbers are present in the rubber composition, a Tg of a styrene-butadiene rubber is a Tg of a mixture of the two or more types of styrene-butadiene rubbers.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation).

A "N$_2$SA of carbon black" is measured according to JIS K 6217-2:2017.

A "N$_2$SA of silica" is measured by a BET method according to ASTM D3037-93.

An "average primary particle size" can be calculated by making observations with a transmission or scanning electron microscope, measuring 400 or more primary particles observed in the field of view, and averaging them. The average primary particle size is applied to carbon black, silica, and the like.

A "softening point" can be defined as a temperature at which a sphere drops when the softening point specified in JIS K 6220-1: 2001 is measured with a ring and ball softening point measuring device.

A "content of a plasticizing agent" also comprises an amount of a plasticizing agent contained in a rubber component extended with the plasticizing agent. Similarly, a "content of oil" also comprises an amount of oil contained in an oil-extended rubber.

[Tire]

The tire that is one embodiment of the present invention (which is hereinafter also referred to as "tire of the present invention") will be described below. However, the following descriptions are illustrative for explaining the present invention and are not intended to limit the technical scope of the present invention to this description range only.

The tire of the present invention is a tire comprising a tread part that comprises at least one rubber layer, wherein the rubber layer constitutes a tread surface, and wherein T and G satisfy the following inequality (1),

$$2G - T \geq 70 \quad (1),$$

(provided that T is lower than -50),
where a glass transition temperature, in °C, of a styrene-butadiene rubber compounded in a rubber component of a rubber composition constituting the rubber layer is referred to as T and a thickness, in mm, of the rubber layer is referred to as G.

FIG. 1 is a view schematically showing a part of a cross-sectional view of the tire of the present invention. In a tire 1 of FIG. 1, a tread part 2 consists of a cap rubber layer 3 constituting a tread surface and a base rubber layer 4 adjacent to its inner side. In the present invention, as the tread part may comprise at least one rubber layer, the tread part may consist of the cap rubber layer. Moreover, as shown in FIG. 1, the tread part may consist of the cap rubber layer and the base rubber layer. Furthermore, the tread part may comprise one or more intermediate rubber layers between the cap rubber layer and the base rubber layer. In this case, the tread part consists of three or more rubber layers. In a case where the tread part comprises an intermediate rubber layer, the intermediate rubber layer may be a rubber layer prepared by compounding as the cap rubber layer, a rubber layer prepared by compounding as the base rubber layer, or a rubber layer prepared by another compounding. The total number of rubber layers constituting the tread part may be, but not particularly limited to, for example, six, five, or four.

In FIG. 1, a thickness of the cap rubber layer 3 that is a rubber layer constituting the tread surface is indicated, by G, as a thickness measured along a normal line drawn from a tire equator. A thickness of another rubber layer constituting the tread part is also measured in the same manner if necessary. Besides, in a case where a circumferential groove is provided on a tire equatorial plane (such a circumferential groove is not present in FIG. 1), a thickness of each rubber layer is a thickness of each rubber layer for which it is recognized that the circumferential groove is filled in each rubber layer.

(Inequality (1))

A value on the right side of the inequality (1) is preferably 75, more preferably 80, further preferably 85, further preferably 90. An upper limit of the value of 2G - T is, but not particularly limited to, usually about 120 from the viewpoint of the effects of the present invention.

In the inequality (1), a value of T, in °C, that is a glass transition temperature (Tg) of a SBR is preferably lower than -54, more preferably -55 or lower, further preferably -60 or lower, further preferably lower than -65. A lower limit of the value of T is, but not particularly limited to, usually about -80°C.

In the inequality (1), a value of G, in mm, is preferably less than 30, more preferably less than 20, further preferably 16 or less. Moreover, the value of G, in mm, is preferably 3 or more, more preferably 4 or more, further preferably 5 or more.

In a case where the tire is a tire for a light truck, the value of G, in mm, is preferably 16 or less, more preferably 15 or less, further preferably 14 or less. Moreover, the value of G, in mm, is preferably 7 or more, more preferably 8 or more.

In a case where the tire is a tire for a passenger car, the value of G, in mm, is preferably 8 or less, more preferably 7 or less. Moreover, the value of G, in mm, is preferably 4 or more, more preferably 5 or more.

When the inequality (1) is satisfied, adjustment is made such that the Tg of the SBR is lowered even if the rubber layer becomes thin, so that easiness of movement of the SBR phase in the rubber layer constituting the tread surface is enhanced, whereby it is considered that an input from a road surface is mitigated.

[Rubber composition]

The rubber composition of the present invention that constitutes the rubber layer constituting the tread surface (which is hereinafter referred to as "rubber composition of the present invention") will be described below.

The rubber composition of the present invention comprises a rubber component, a filler, and a resin component.

<Rubber component>

The rubber component comprises 20% by mass or more of a styrene-butadiene rubber and an isoprene-based rubber.

(SBR)

The SBR is not particularly limited, examples of which include a non-modified solution-polymerized SBR (S-SBR), a non-modified emulsionpolymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, the S-SBR and the modified SBR are preferable. Furthermore, hydrogenated ones of these SBRs (hydrogenated SBRs) and the like can also be used. These SBRs may be used alone, or two or more thereof may be used in combination.

A SBR extended with a plasticizing agent (extended SBR) or a nonextended SBR may be used as the SBR. When the extended SBR is used, an extending amount of the SBR, that is, a content of an extending plasticizing agent in the SBR is preferably 10 to 50 parts by mass based on 100 parts by mass of a rubber solid content of the SBR.

As the S-SBR that can be used in the present invention, those commercially available from JSR Corporation, Sumitomo Chemical Co., Ltd., Ube Industries, Ltd., Asahi Kasei Corporation, ZS Elastomer Co., Ltd., etc. can be used.

A styrene content of the SBR is preferably greater than 5% by mass, more preferably greater than 7% by mass, further preferably 10% by mass or more, from the viewpoints of wet grip performance and abrasion resistance. Moreover, it is preferably less than 60% by mass, more preferably less than 40% by mass, further preferably 35% by mass or less, from the viewpoints of temperature dependency of grip performance and blow resistance. Besides, the styrene content of the SBR is measured by the above-described measuring method.

A vinyl content of the SBR is preferably 10 mol% or more, more preferably greater than 20 mol%, further preferably 25 mol% or more, from the viewpoints of ensuring reactivity with silica, wet grip performance, rubber strength, and abrasion resistance. Moreover, the vinyl content of the SBR is preferably less than 80 mol%, more preferably less than 60 mol%, further preferably less than 45 mol%, from the viewpoints of prevention of increase in temperature dependency, elongation at break, and abrasion resistance. Besides, the vinyl content of the SBR is measured by the above-described measuring method.

A weight-average molecular weight (Mw) of the SBR is preferably 200,000 or more, more preferably 250,000 or more, further preferably 300,000 or more, from the viewpoint of wet grip performance. Moreover, the Mw of the SBR is preferably 2,000,000 or less, more preferably 1,800,000 or less, further preferably 1,500,000 or less, from the viewpoint of cross-linking uniformity. Besides, the Mw of the SBR is measured by the above-described measuring method.

A content of the SBR in 100% by mass of the rubber component is preferably 25% by mass or more, more preferably greater than 30% by mass, further preferably greater than 35% by mass. On the other hand, the content of the SBR is preferably less than 95% by mass, more preferably less than 85% by mass, further preferably less than 75% by mass, further preferably 70% by mass or less.

(Isoprene-based rubber)

As an isoprene-based rubber, for example, those common in the tire industry can be used, such as an isoprene rubber (IR), a natural rubber, and the like. Examples of the natural rubber include not only a non-modified natural rubber (NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is preferably greater than 5% by mass, more preferably greater than 15% by mass, further preferably greater than 25% by mass. On the other hand, the content of the isoprene-based rubber is 80% by mass or less, preferably less than 80% by mass, further preferably 75% by mass or less, further preferably less than 70% by mass, further preferably less than 65% by mass.

(Other rubber components)

The rubber component may comprise a rubber component other than the above-described SBR and IR-based rubber. Examples of such a rubber component include, for example, diene-based rubbers such as a butadiene rubber (BR), a styrene-isoprene rubber (SIR), a styrene-isoprene-butadiene rubber (SIBR), a chloroprene rubber (CR), an acrylonitrile-butadiene rubber (NBR), and the like, and non-diene-based rubbers such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

A total content of the SBR and the IR-based rubber in the rubber component is preferably greater than 70% by mass, more preferably greater than 80% by mass, further preferably greater than 90% by mass, particularly preferably greater than 95% by mass. Moreover, the rubber component may be one consisting of a SBR and an IR-based rubber.

<Filler>

The filler is one comprising carbon black and preferably further comprises silica.

The filler may be one comprising a filler other than carbon black and silica. Examples of such a filler include, for example, those commonly used in the tire industry, such as, for example, aluminum hydroxide, alumina (aluminum oxide), calcium carbonate, magnesium sulfate, talc, clay, and the like. These other fillers may be used alone, or two or more thereof may be used in combination.

The filler preferably consists of carbon black and silica.

(Carbon black)

Carbon black is not particularly limited, and those common in the tire industry can be used, such as GPF, FEF, HAF, ISAF, and SAF. Specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used in addition to them. These carbon black may be used alone, or two or more thereof may be used in combination.

A nitrogen adsorption specific surface area ($N_2SA$) of the carbon black is preferably 10 $m^2/g$ or more, more preferably 20 $m^2/g$ or more, further preferably 35 $m^2/g$ or more, particularly preferably 50 $m^2/g$ or more, from the viewpoint of reinforcing property. Moreover, it is preferably 200 $m^2/g$ or less, more preferably 150 $m^2/g$ or less, further preferably 130 $m^2/g$ or less, from the viewpoints of fuel efficiency and processability. Besides, the $N_2SA$ of the carbon black is measured by the above-described measuring method.

An average primary particle size of the carbon black is preferably less than 30 nm, more preferably less than 26 nm, further preferably less than 23 nm, further preferably 22 nm or less. A lower limit of the average primary particle size is, but not particularly limited to, preferably greater than 1 nm, more preferably greater than 3 nm, further preferably greater than 5 nm. Besides, the average primary particle size can be calculated by the above-described measuring method.

A content of the carbon black when compounded based on 100 parts by mass of the rubber component is preferably greater than 1 part by mass, more preferably greater than 3 parts by mass, further preferably greater than 5 parts by mass, further preferably 10 parts by mass or more, from the viewpoints of weather resistance and reinforcing property. Moreover, it is preferably less than 40 parts by mass, more preferably less than 30 parts by mass, further preferably less than 20 parts by mass, further preferably 10 parts by mass or less, from the viewpoint of fuel efficiency.

(Silica)

Silica is not particularly limited, and for example, those common in the tire industry can be used, such as silica prepared by a dry process (anhydrous silica), silica prepared by a wet process (hydrous silica), and the like. Among them, hydrous silica prepared by a wet process is preferable from the reason that it has many silanol groups. The silica may be used alone, or two or more thereof may be used in combination.

A nitrogen adsorption specific surface area ($N_2SA$) of the silica is preferably greater than 140 $m^2/g$, more preferably greater than 150 $m^2/g$, further preferably greater than 160 $m^2/g$, particularly preferably 175 $m^2/g$ or more, from the viewpoints of fuel efficiency and abrasion resistance. Moreover, it is preferably less than 350 $m^2/g$, more preferably less than 300 $m^2/g$, further preferably less than 250 $m^2/g$, from the viewpoints of fuel efficiency and processability. Besides, the $N_2SA$ of the silica is measured by the above-described measuring method.

An average primary particle size of the silica is preferably less than 25 nm, more preferably less than 22 nm, further preferably less than 20 nm. A lower limit of the average primary particle size is, but not particularly limited to, preferably greater than 1 nm, more preferably greater than 3 nm, further preferably greater than 5 nm. Besides, the average primary particle size can be calculated by the above-described method.

A content of the silica when compounded based on 100 parts by mass of the rubber component is preferably greater than 40 parts by mass, preferably greater than 50 parts by mass, further preferably 60 parts by mass or more, from the viewpoints of fuel efficiency, wet grip performance, and abrasion resistance. Moreover, it is preferably less than 150 parts by mass, preferably less than 120 parts by mass, further preferably less than 100 parts by mass, from the viewpoint of suppressing deterioration of fuel efficiency and abrasion resistance due to deterioration of dispersibility of the silica in a rubber.

(Silica/carbon black ratio)

A content ratio of a mass of the silica to a mass of the carbon black is preferably greater than 1.0, more preferably greater than 2.0, further preferably greater than 3.0, further preferably greater than 4.0, further preferably greater than 5.0. On the other hand, the ratio is preferably less than 12.0, more preferably less than 10.0, further preferably less than 8.0, further preferably less than 7.0.

(Content of filler)

A total content of fillers based on 100 parts by mass of the rubber component is preferably greater than 40 parts by mass, more preferably greater than 50 parts by mass, further preferably greater than 60 parts by mass, further preferably 70 parts by mass or more. Moreover, the total content is preferably less than 200 parts by mass, preferably less than 150 parts by mass, preferably less than 120 parts by mass, further preferably less than 100 parts by mass.

(Silane coupling agent)

Silica is preferably used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane cou-pling agents such as $\gamma$-glycidoxypropyltriethoxysilane, $\gamma$-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Momentive Performance Materials, etc. can be used. These silane coupling agents may be used alone, or two or more thereof may be used in combination.

A content of the silane coupling agent based on 100 parts by mass of the silica is preferably greater than 1.0 part by mass, more preferably greater than 3.0 parts by mass, further preferably greater than 5.0 parts by mass, from the viewpoint of enhancing dispersibility of the silica. Moreover, it is preferably less than 30 parts by mass, more preferably less than 20 parts by mass, further preferably less than 15 parts by mass, from the viewpoints of cost and processability.

<Resin component>

Examples of the resin component include a petroleum resin, a terpene-based resin, a rosin-based resin, a phenol-based resin, and the like which are commonly used in the tire industry. These resin components may be used alone, or two or more thereof may be used in combination.

Examples of the petroleum resin include a C5-based petroleum resin, an aromatic petroleum resin, a C5-C9-based petroleum resin, and the like.

The C5-based petroleum resin means a resin obtained by polymerizing C5 fractions. Examples of C5 fractions include, for example, petroleum fractions having 4 to 5 carbon atoms, such as cyclopentadiene, pentene, pentadiene, isoprene, and the like. A dicyclopentadiene resin (DCPD resin) is appropriately used as a C5-based petroleum resin.

The aromatic petroleum resin means a resin obtained by polymerizing C9 fractions and may be those undergoing hydrogenation or modification. Examples of C9 fractions include, for example, petroleum fractions having 8 to 10 carbon atoms, such as vinyltoluene, alkylstyrene, indene, methylindene, and the like. As specific example of the aromatic petroleum resin, for example, a coumarone-indene resin, a coumarone resin, an indene resin, and an aromatic vinyl-based resin are appropriately used. As the aromatic vinyl-based resin, a homopolymer of $\alpha$-methylstyrene or styrene or a copolymer of $\alpha$-methylstyrene and styrene is preferable, and the copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

The C5-C9-based petroleum resin means a resin obtained by polymerizing the C5 fractions and the C9 fractions and may be those undergoing hydrogenation or modification. Examples of C5 fractions and C9 fractions include the above-described petroleum fractions. As the C5-C9-based petroleum resin, for example, those commercially available from Tosoh Corporation, Zibo Luhua Hongjin New Material Co., Ltd., etc. can be used.

(Terpene-based resin)

Examples of the terpene-based resin include a polyterpene resin consisting of at least one selected from terpene compounds such as α-pinene, β-pinene, limonene, dipentene, and the like; an aromatic modified terpene resin made from a terpene compound described above and an aromatic compound; and a terpene phenol resin made from a terpene compound and a phenol-based compound; and a resin obtained by hydrogenating these types of terpene-based resin (hydrogenated terpene-based resin). Examples of the aromatic compound from which the aromatic modified terpene resin is made include, for example, styrene, α-methylstyrene, vinyltoluene, divinyltoluene, and the like. Examples of the phenol-based compound from which the terpene phenol resin is made include, for example, phenol, bisphenol A, cresol, xylenol, and the like.

(Rosin-based resin)

Examples of the rosin-based resin include, but not particularly limited to, for example, a natural resin rosin, and a rosin-modified resin obtained by modifying it by hydrogenation, disproportionation, dimerization, or esterification, and the like.

(Phenol-based resin)

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A content of the resin component based on 100 parts by mass of the rubber component is preferably greater than 1 part by mass, more preferably greater than 3 parts by mass, further preferably greater than 4 parts by mass, further preferably 5 parts by mass or more. Moreover, the content of the resin component is preferably less than 20 parts by mass, more preferably less than 15 parts by mass, further preferably less than 10 parts by mass.

<Plasticizing agent>

The rubber composition according to the present invention can comprise a plasticizing agent other than the above-described resin component. The plasticizing agent is a material giving a rubber component plasticity and is a concept including both a plasticizing agent that is a liquid (in a liquid state) at normal temperature (25°C) and a plasticizing agent that is a solid at normal temperature (25°C). Specific examples of the plasticizing agent other than the above-described resin component include, for example, oil, a liquid polymer, an ester-based plasticizing agent, and the like. The plasticizing agents other than resin components may be used alone, or two or more thereof may be used in combination.

(Oil)

Examples of the oil include, for example, process oils, vegetable oils and fats, animal oils and fats, and the like. Examples of the process oils include paraffinic process oils, naphthenic process oils, aromatic process oils, and the like. Moreover, as an environmental measure, process oils each having a low content of a polycyclic aromatic compound (PCA) can also be used. Examples of the process oils each having a low content of a PCA include mild extraction solvates (MES), treated distillate aromatic extracts (TDAE), heavy naphthenic oil, and the like. The oils may be used alone, or two or more thereof may be used in combination.

(Liquid polymer)

The liquid polymer is not particularly limited as long as it is a polymer in a liquid state at normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. The liquid polymers may be used alone, or two or more thereof may be used in combination.

(Ester-based plasticizing agent)

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agents may be used alone, or two or more thereof may be used in combination.

(Content)

A content of the plasticizing agent other than the resin compound when compounded based on 100 parts by mass of the rubber component (a total amount of all of a plurality of such plasticizing agents when used in combination) is preferably greater than 1 part by mass, more preferably greater than 3 parts by mass, further preferably greater than 5 parts by mass. Moreover, the content of the plasticizing agent is preferably less than 50 parts by mass, more preferably less than 30 parts by mass, further preferably less than 10 parts by mass.

<Other compounding agents>

The rubber composition according to the present invention can appropriately comprise compounding agents conventionally and commonly used in the tire industry, such as, for example, wax, processing aid, stearic acid, zinc oxide, an antioxidant, a vulcanizing agent, a vulcanization accelerator, and the like, in addition to the above-described components.

A content of the wax when compounded based on 100 parts by mass of the rubber component is preferably greater than 0.5 parts by mass, more preferably greater than 0.7 parts by mass, further preferably greater than 0.9 parts by mass, from the viewpoint of weather resistance of a rubber. Moreover, it is preferably less than 10 parts by mass, more preferably less than 5 parts by mass, more preferably less than 3 parts by mass, from the viewpoint of prevention of whitening of a tire due to bloom.

Examples of the processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of the processing aid when compounded based on 100 parts by mass of the rubber component is preferably greater than 0.5 parts by mass, more preferably greater than 0.7 parts by mass, further preferably greater than 0.9 parts by mass, from the viewpoint of exhibiting an effect of improving processability. Moreover, it is preferably less than 10 parts by mass, more preferably less than 8 parts by mass, further preferably less than 6 parts by mass, from the viewpoints of abrasion resistance and breaking strength.

Examples of the antioxidant include, but not particularly limited to, for example, amine-based, quinoline-based, quinone-based, phenol-based, and imidazole-based compounds, and antioxidants such as a carbamic acid metal salt and the like, and a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like; and a quinoline-based antioxidant such as 2,2,4-trimethyl-1,2-dihydroquinoline polymer, 6-ethoxy-2,2,4-trimethyl-1,2-dihydroquinoline, and the like are preferable. These antioxidants may be used alone, or two or more thereof may be used in combination.

A content of the antioxidant when compounded based on 100 parts by mass of the rubber component is preferably greater than 0.5 parts by mass, more preferably greater than 1 part by mass, further preferably greater than 1.5 parts by mass, from the viewpoint of ozone crack resistance of a rubber. Moreover, it is preferably less than 10 parts by mass, more preferably less than 7 parts by mass, further preferably less than 5 parts by mass, from the viewpoints of abrasion resistance and wet grip performance.

A content of the zinc oxide when compounded based on 100 parts by mass of the rubber component is preferably greater than 0.5 parts by mass, more preferably greater than 1 part by mass, further preferably greater than 1.5 parts by mass, from the viewpoint of processability. Moreover, it is preferably less than 10 parts by mass, more preferably less than 7 parts by mass, further preferably less than 5 parts by mass, from the viewpoint of abrasion resistance.

A content of the stearic acid when compounded based on 100 parts by mass of the rubber component is preferably greater than 0.5 parts by mass, more preferably 1 part by mass or more, further preferably greater than 1.5 parts by mass, from the viewpoint of processability. Moreover, it is preferably less than 10 parts by mass, more preferably less than 7 parts by mass, further preferably less than 5 parts by mass, from the viewpoint of vulcanization rate.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably greater than 0.1 parts by mass, more preferably greater than 0.3 parts by mass, further preferably greater than 0.5 parts by mass, from the viewpoint of securing a sufficient vulcanization reaction. Moreover, it is preferably less than 5.0 parts by mass, more preferably less than 4.0 parts by mass, further preferably less than 3.0 parts by mass, from the viewpoint of prevention of deterioration. Besides, a content of the vulcanizing agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, xanthate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable, and a combination of a sulfenamide-based vulcanization accelerator and a guanidine-based vulcanization accelerator is more preferable.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-cyclohexyl-2-benzothiazolyl sulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionylguanidine, and the like. Among them, 1,3-diphenylguanidine (DPG) is preferable.

A content of the vulcanization accelerator when compounded based on 100 parts by mass of the rubber component (a total amount of all of a plurality of vulcanization accelerators when used in combination) is preferably greater than 0.5 parts by mass, more preferably greater than 1 part by mass, further preferably greater than 1.5 parts by mass. Moreover, the content of the vulcanization accelerator based on 100 parts by mass of the rubber component is preferably less than 8 parts by mass, more preferably less than 7 parts by mass, further preferably less than 6 parts by mass. When the content of the vulcanization accelerator is within the above-described ranges, breaking strength and elongation tend to be secured.

[Production method]

The rubber composition of the present invention can be produced by a known method. For example, it can be produced by kneading the above-described components with a rubber kneading machine such as an open roll, a sealed type kneader (a Banbury mixer, a kneader, and the like), and the like.

A kneading step includes, for example, a base kneading step of kneading compounding agents and additives other than a vulcanizing agent and a vulcanization accelerator, and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of a kneading condition include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of a vulcanization condition include, but not particularly limited to, for example, a method of vulcanizing at 150°C to 200°C for 10 to 30 minutes.

The tire of the present invention can be produced using the above-described rubber composition by a usual method. That is, the tire can be produced by extruding unvulcanized rubber compositions, in which the above-described components are compounded for rubber components as appropriate, into a shape of a rubber layer constituting a tread surface of a tread part with an extruder equipped with a mouthpiece having a predetermined shape, attaching the extruded unvulcanized tread together with other tire members on a tire forming machine to form an unvulcanized tire by a usual molding method, followed by heating and pressurizing this unvulcanized tire in a vulcanizing machine. Examples of the vulcanization condition include, but not particularly limited to, for example, a method of vulcanizing at 150°C to 200°C for 10 to 30 minutes.

[Application]

The tire of the present invention can be appropriately used as a tire for a passenger car, a tire for a heavy-duty vehicle, a motorcycle tire, and a racing tire, and among them, the tire of the present invention is preferably used as a tire for a passenger car and a tire for a heavy-duty vehicle. A "tire for a passenger car" is a tire that is presupposed to be mounted to a vehicle running with four wheels and that has a maximum load capacity of 1000 kg or less. A "tire for a heavy-duty vehicle" is a tire that is used not only for a large truck, a large bus, etc. but also for a small truck, a small bus, a van, etc. and that has a maximum load capacity of greater than 1000 kg. In a case where the heavy-duty tire is applied to a large vehicle, its maximum load capacity is preferably greater than 1400 kg. On the other hand, in a case where the heavy-duty tire is applied to a small vehicle, a cord of a belt reinforcement layer and/or a carcass is preferably a textile cord. Moreover, the tire of the present invention can be used as an all-season tire, a summer tire, or a winter tire such as a studless tire and the like.

EXAMPLES

Hereinafter, examples considered to be preferable in implementing the present invention (Examples) will be described, though the scope of the present invention is not limited to only these Examples.

Tires comprising treads composed of rubber compositions obtained using various chemicals which will be described below in accordance with Table 1 are studied, and results calculated based on the following analysis/evaluation methods are shown in Tables 2 to 4.

SBR 1: C2525 manufactured by VERSALIS (styrene content: 25% by mass, vinyl content: 25 mol%, Tg: -52°C)
SBR 2: SL552 manufactured by JSR Corporation (styrene content: 23% by mass, vinyl content: 32 mol%, Tg: -55°C)
SBR 3: HPR840 manufactured by JSR Corporation (styrene content: 10% by mass, vinyl content: 40 mol%, Tg: -62°C)
SBR 4: SL553 manufactured by JSR Corporation (styrene content: 10% by mass, vinyl content: 37 mol%, Tg: -60°C)
SBR 5: N9541 manufactured by Zeon Corporation (styrene content: 10% by mass, vinyl content: 41 mol%, Tg: -67°C, comprising 37.5 parts by mass of an extending oil based on 100 parts by mass of a rubber solid content)
SBR 6: Tufdene 3830 manufactured by Asahi Kasei Corporation (styrene content: 35% by mass, vinyl content: 40 mol%, Tg: -40°C, comprising 37.5 parts by mass of an extending oil based on 100 parts by mass of a rubber solid content)
Isoprene-based rubber: TSR 20
BR: BR150B manufactured by Ube Industries, Ltd. (cis content: 97% by mass)
Carbon black: DIABLACK I (N220) manufactured by Mitsubishi Chemical Corporation ($N_2SA$: 114 $m^2$/g, average primary particle size: 22 nm)
Silica: Ultrasil (Registered Trademark) VN3 manufactured by Evonik Degussa GmbH ($N_2SA$: 175 $m^2$/g, average primary particle size: 18 nm)
Silane coupling agent: Si69 manufactured by Evonik Degussa GmbH (bis(3-triethoxysilylpropyl)tetrasulfide)
Oil: Diana process NH-70S manufactured by Idemitsu Kosan Co., Ltd. (aromatic process oil)
Wax: OZOACE 0355 manufactured by Nippon Seiro Co., Ltd.
Antioxidant 1: Nocrac 6C manufactured by Ouchi Shinko Chemical Industry Co., Ltd. (N-(1,3-dimethylbutyl)-N'-phenyl-p-phenylenediamine)
Antioxidant 2: Nocrac 224 manufactured by Ouchi Shinko Chemical Industry Co., Ltd. (2,2,4-trimethyl-1,2-dihydroquinoline polymer)
Stearic acid: Bead stearic acid "CAMELLIA" manufactured by NOF CORPORATION
Zinc oxide: Zinc oxide No. 1 manufactured by Mitsui Mining & Smelting Co., Ltd.
Resin component: Sylvatraxx 4401 manufactured by Kraton Corporation (copolymer of $\alpha$-methylstyrene and styrene, softening point: 85°C, Mw: 520)
Sulfur: Powdered sulfur manufactured by Tsurumi Chemical Industry Co., ltd. (5% oil-containing powdered sulfur)
Vulcanization accelerator 1: Nocceler CZ-G manufactured by Ouchi Shinko Chemical Industry Co., Ltd. (N-cyclohexyl-2-benzothiazolylsulfenamide)
Vulcanization accelerator 2: Nocceler D manufactured by Ouchi Shinko Chemical Industry Co., Ltd. (1,3-diphenylguanidine (DPG))

According to the compounding formulations shown in Table 1, using a 1.7 L closed Banbury mixer, all chemicals other than sulfur and a vulcanization accelerator are kneaded for 1 to 10 minutes until a temperature reaches a discharge temperature of 150°C to 160°C, to obtain a kneaded product. Next, using a twin-screw open roll, sulfur and the vulcanization accelerator are added to the obtained kneaded product, and the mixture is kneaded for 4 minutes until the temperature reaches 105°C, to obtain an unvulcanized rubber composition.

The obtained unvulcanized rubber composition is molded into a shape of a cap rubber layer and, as necessary, shapes of an intermediate rubber layer and a base rubber layer of a tread part and attached together with other tire members to produce an unvulcanized tire, and the unvulcanized tire is pressvulcanized at 170°C for 12 minutes, thereby obtaining each test tire shown in

Tables 2 to 4 (size: 205/75R16 (for light truck), 235/55R18 (for passenger car)).

<Chipping resistance>

After each test tire is assembled to a standardized rim and is filled with air up to a standardized internal pressure, the tire is mounted on a vehicle, and the vehicle is made run on an uneven ground at a speed of 50 km/hour for 4 hours. 2 mm or more of rubber chippings occurring on a tire surface after the running are counted as chipping, thereby determining the number of chipping for each tire. A chipping resistance index is calculated from the determined number of chippings using the following equation. The results show that the larger the index is, the less the number of rubber chippings is, which means that the chipping resistance is excellent,

$$(\text{Chipping resistance index}) = (\text{Number of chippings for reference Example})/(\text{Number of chippings for each test example}) \times 100.$$

Table 1

(Rubber composition)

| | A | B | C | D | E | F | G | H | a | b | c |
|---|---|---|---|---|---|---|---|---|---|---|---|
| Compounding amount (part by mass | | | | | | | | | | | |
| SBR 1 (-52°C) | 25 | - | - | - | - | - | - | - | 15 | 100 | 25 |
| SBR 2 (-55°C) | - | 25 | - | - | - | - | - | - | - | - | - |
| SBR 3 (-62°C) | - | - | 25 | 70 | 25 | 25 | - | - | - | - | - |
| SBR 4 (-60°C) | - | - | - | - | - | - | 25 | - | - | - | - |
| SBR 5 (-67°C) | - | - | - | - | - | - | - | 25 | - | - | - |
| SBR 6 (-40°C) | - | - | - | - | - | - | - | - | - | - | - |
| Isoprene-based rubber | 75 | 75 | 75 | 30 | 75 | 75 | 75 | 75 | 85 | - | 75 |
| BR | - | - | - | - | - | - | - | - | - | - | - |
| Carbon black (CB) | 10 | 10 | 10 | 10 | 30 | 10 | 10 | 10 | 10 | 10 | 10 |
| Silica | 60 | 60 | 60 | 60 | 40 | 60 | 60 | 60 | 60 | 60 | 60 |
| Silane coupling agent | 6 | 6 | 6 | 6 | 4 | 6 | 6 | 6 | 6 | 6 | 6 |
| (Silica/CB ratio) | (6.0) | (6.0) | (6.0) | (6.0) | (1.3) | (6.0) | (6.0) | (6.0) | (6.0) | (6.0) | (6.0) |
| Oil | 10 | 10 | 10 | 10 | 10 | 10 | 10 | 10 | 10 | 10 | 10 |
| Wax | 1 | 1 | 1 | 1 | 1 | 1 | 1 | 1 | 1 | 1 | 1 |
| Antioxidant 1 | 2 | 2 | 2 | 2 | 2 | 2 | 2 | 2 | 2 | 2 | 2 |
| Antioxidant 2 | 1 | 1 | 1 | 1 | 1 | 1 | 1 | 1 | 1 | 1 | 1 |
| Stearic acid | 2 | 2 | 2 | 2 | 2 | 2 | 2 | 2 | 2 | 2 | 2 |
| Zinc oxide | 2.5 | 2.5 | 2.5 | 2.5 | 2.5 | 2.5 | 2.5 | 2.5 | 2.5 | 2.5 | 2.5 |
| Resin component | 5 | 5 | 5 | 5 | 5 | 20 | 5 | 5 | 5 | 5 | - |
| Sulfur | 1.1 | 1.1 | 1.1 | 1.1 | 1.1 | 1.1 | 1.1 | 1.1 | 1.1 | 1.1 | 1.1 |
| Vulcanization accelerator 1 | 1.1 | 1.1 | 1.1 | 1.1 | 1.1 | 1.1 | 1.1 | 1.1 | 1.1 | 1.1 | 1.1 |
| Vulcanization accelerator 2 | 0.5 | 0.5 | 0.5 | 0.5 | 0.5 | 0.5 | 0.5 | 0.5 | 0.5 | 0.5 | 0.5 |

| | d | e | f | g | h | i | j | k | l | x | y |
|---|---|---|---|---|---|---|---|---|---|---|---|
| Compounding amount (part by mass) | | | | | | | | | | | |
| SBR 1 (-52°C) | - | - | - | - | - | - | - | - | - | - | - |
| SBR 2 (-55°C) | - | 25 | - | 15 | 100 | - | - | - | - | - | - |

(continued)

| Compounding amount (part by mass) | d | e | f | g | h | i | j | k | l | x | y |
|---|---|---|---|---|---|---|---|---|---|---|---|
| SBR 3 (-62°C) | - | - | 25 | - | - | - | - | 15 | 100 | - | - |
| SBR 4 (-60°C) | - | - | - | - | - | 25 | - | - | - | - | - |
| SBR 5 (-67°C) | - | - | - | - | - | - | 34.4 | - | - | - | - |
| SBR 6 (-40°C) | 34.4 | - | - | - | - | - | - | - | - | - | - |
| Isoprene-based rubber | 75 | 75 | 75 | 85 | - | 75 | 75 | 85 | - | 70 | 100 |
| BR | - | - | - | - | - | - | - | - | - | 30 | - |
| Carbon black (CB) | 10 | 10 | 10 | 10 | 10 | 10 | 10 | 10 | 10 | 40 | 35 |
| Silica | 60 | 60 | 60 | 60 | 60 | 60 | 60 | 60 | 60 | - | 5 |
| Silane coupling agent | 6 | 6 | 6 | 6 | 6 | 6 | 6 | 6 | 6 | - | 0.5 |
| (Silica/CB ratio) | (6.0) | (6.0) | (6.0) | (6.0) | (6.0) | (6.0) | (6.0) | (6.0) | (6.0) | - | - |
| Oil | 10 | 10 | 10 | 10 | 10 | 10 | 10 | 10 | 10 | 8 | - |
| Wax | 1 | 1 | 1 | 1 | 1 | 1 | 1 | 1 | 1 | 2 | - |
| Antioxidant 1 | 2 | 2 | 2 | 2 | 2 | 2 | 2 | 2 | 2 | 3 | 1.5 |
| Antioxidant 2 | 1 | 1 | 1 | 1 | 1 | 1 | 1 | 1 | 1 | - | - |
| Stearic acid | 2 | 2 | 2 | 2 | 2 | 2 | 2 | 2 | 2 | 2 | 2 |
| Zinc oxide | 2.5 | 2.5 | 2.5 | 2.5 | 2.5 | 2.5 | 2.5 | 2.5 | 2.5 | 2 | 3.5 |
| Resin component | 5 | - | - | 5 | 5 | - | - | 5 | 5 | - | - |
| Sulfur | 1.1 | 1.1 | 1.1 | 1.1 | 1.1 | 1.1 | 1.1 | 1.1 | 1.1 | 1.5 | 2.5 |
| Vulcanization accelerator 1 | 1.1 | 1.1 | 1.1 | 1.1 | 1.1 | 1.1 | 1.1 | 1.1 | 1.1 | 1.5 | 1.5 |
| Vulcanization accelerator 2 | 0.5 | 0.5 | 0.5 | 0.5 | 0.5 | 0.5 | 0.5 | 0.5 | 0.5 | - | - |

Table 2

(Tire for light truck: 205/75R16)

| | Example | | | | | | | | |
|---|---|---|---|---|---|---|---|---|---|
| | 1-1 | 1-2 | 1-3 | 1-4 | 1-5 | 1-6 | 1-7 | 1-8 | 1-9 |
| Cap rubber layer | | | | | | | | | |
| Compounding formulation of rubber layer | A | B | C | A | B | C | D | E | F |
| Thickness of rubber layer (mm) G | 16 | 16 | 16 | 13 | 13 | 13 | 13 | 13 | 13 |
| Amount of SBR (% by mass) | 25 | 25 | 25 | 25 | 25 | 25 | 70 | 25 | 25 |
| Amount of NR (% by mass) | 75 | 75 | 75 | 75 | 75 | 75 | 30 | 75 | 75 |
| Amount of carbon black (part by mass) | 10 | 10 | 10 | 10 | 10 | 10 | 10 | 30 | 10 |
| Amount of resin component (part by mass) | 5 | 5 | 5 | 5 | 5 | 5 | 5 | 5 | 20 |
| Tg of SBR (°C) T | -52 | -55 | -62 | -52 | -55 | -62 | -62 | -62 | -62 |
| 2G-T | 84 | 87 | 94 | 78 | 81 | 88 | 88 | 88 | 88 |
| Silica/CB ratio | 6.0 | 6.0 | 6.0 | 6.0 | 6.0 | 6.0 | 6.0 | 1.3 | 6.0 |
| Base rubber layer | | | | | | | | | |
| Compounding formulation of rubber layer | y | y | y | y | y | y | y | y | y |
| Thickness of rubber layer (mm) | 2 | 2 | 2 | 5 | 5 | 5 | 5 | 5 | 5 |
| Chipping resistance | 115 | 125 | 135 | 110 | 128 | 139 | 148 | 155 | 161 |
| | Comparative example | | | | | | | | |
| | 1-1 | 1-2 | 1-3 | 1-4 | 1-5 | 1-6 | 1-7 | 1-8 | |
| Cap rubber layer | | | | | | | | | |
| Compounding formulation of rubber layer | a | b | c | d | A | e | e | f | |
| Thickness of rubber layer (mm) G | 16 | 16 | 16 | 16 | 8 | 16 | 13 | 13 | |

(continued)

| | Comparative example | | | | | | | |
|---|---|---|---|---|---|---|---|---|
| | 1-1 | 1-2 | 1-3 | 1-4 | 1-5 | 1-6 | 1-7 | 1-8 |
| Cap rubber layer | | | | | | | | |
| Amount of SBR (% by mass) | 15 | 100 | 25 | 25 | 25 | 25 | 25 | 25 |
| Amount of NR (% by mass) | 85 | 0 | 75 | 75 | 75 | 75 | 75 | 75 |
| Amount of carbon black (part by mass) | 10 | 10 | 10 | 10 | 10 | 10 | 10 | 10 |
| Amount of resin component (part by mass) | 5 | 5 | 0 | 5 | 5 | 0 | 0 | 0 |
| Tg of SBR (°C) T | -52 | -52 | -52 | -40 | -52 | -55 | -55 | -62 |
| 2G-T | 84 | 84 | 84 | 72 | 68 | 87 | 81 | 88 |
| Silica/CB ratio | 6.0 | 6.0 | 6.0 | 6.0 | 6.0 | 6.0 | 6.0 | 6.0 |
| Base rubber layer | | | | | | | | |
| Compounding formulation of rubber layer | y | y | y | y | y | y | y | y |
| Thickness of rubber layer (mm) | 2 | 2 | 2 | 2 | 10 | 2 | 5 | 5 |
| Chipping resistance | 95 | 75 | 85 | 80 | 83 | 80 | 70 | 78 |

Table 3

(Tire for passenger car: 235/55R18)

| | Example | | | | | | | | |
|---|---|---|---|---|---|---|---|---|---|
| | 2-1 | 2-2 | 2-3 | 2-4 | 2-5 | 2-6 | 2-7 | 2-8 | 2-9 |
| Cap rubber layer | | | | | | | | | |
| Compounding formulation of rubber layer | B | C | H | G | C | H | D | E | F |
| Thickness of rubber layer (mm) G | 8 | 8 | 8 | 6 | 6 | 6 | 6 | 6 | 6 |
| Amount of SBR (% by mass) | 25 | 25 | 25 | 25 | 25 | 25 | 70 | 25 | 25 |
| Amount of NR (% by mass) | 75 | 75 | 75 | 75 | 75 | 75 | 30 | 75 | 75 |
| Amount of carbon black (part by mass) | 10 | 10 | 10 | 10 | 10 | 10 | 10 | 30 | 10 |
| Amount of resin component (part by mass) | 5 | 5 | 5 | 5 | 5 | 5 | 5 | 5 | 20 |
| Tg of SBR (°C) T | -55 | -62 | -67 | -60 | -62 | -67 | -62 | -62 | -62 |
| 2G - T | 71 | 78 | 83 | 72 | 74 | 79 | 74 | 74 | 74 |
| Silica/CB ratio | 6.0 | 6.0 | 6.0 | 6.0 | 6.0 | 6.0 | 6.0 | 1.3 | 6.0 |
| Base rubber layer | | | | | | | | | |
| Compounding formulation of rubber layer | y | y | y | y | y | y | y | y | y |
| Thickness of rubber layer (mm) | 2 | 2 | 2 | 4 | 4 | 4 | 4 | 4 | 4 |
| Chipping resistance | 115 | 125 | 135 | 110 | 122 | 140 | 128 | 135 | 138 |

| | Comparative example | | | | | | |
|---|---|---|---|---|---|---|---|
| | 2-1 | 2-2 | 2-3 | 2-4 | 2-5 | 2-6 | 2-7 |
| Cap rubber layer | | | | | | | |
| Compounding formulation of rubber layer | 9 | h | e | d | B | i | j |
| Thickness of rubber layer (mm) G | 8 | 8 | 8 | 8 | 8 | 8 | 8 |
| Amount of SBR (% by mass) | 15 | 100 | 25 | 25 | 25 | 25 | 25 |
| Amount of NR (% by mass) | 85 | 0 | 75 | 75 | 75 | 75 | 75 |
| Amount of carbon black (part by mass) | 10 | 10 | 10 | 10 | 10 | 10 | 10 |
| Amount of resin component (part by mass) | 5 | 5 | 0 | 5 | 5 | 0 | 0 |
| Tg of SBR (°C) T | -55 | -55 | -55 | -40 | -55 | -60 | -67 |
| 2G-T | 71 | 71 | 71 | 56 | 71 | 76 | 83 |

(continued)

|  | Comparative example | | | | | | |
|---|---|---|---|---|---|---|---|
|  | 2-1 | 2-2 | 2-3 | 2-4 | 2-5 | 2-6 | 2-7 |
| Cap rubber layer | | | | | | | |
| Silica/CB ratio | 6.0 | 6.0 | 6.0 | 6.0 | 6.0 | 6.0 | 6.0 |
| Base rubber layer | | | | | | | |
| Compounding formulation of rubber layer | y | y | y | y | y | y | y |
| Thickness of rubber layer (mm) | 2 | 2 | 2 | 2 | 2 | 2 | 2 |
| Chipping resistance | 95 | 75 | 85 | 80 | 83 | 70 | 78 |

Table 4

(Tire for passenger car: 235/55R18)

|  | Example | Comparative example | | | |
|---|---|---|---|---|---|
|  | 3-1 | 3-1 | 3-2 | 3-3 | 3-4 |
| Cap rubber layer | | | | | |
| Compounding formulation of rubber layer | H | k | I | f | A |
| Thickness of rubber layer (mm) G | 3 | 3 | 3 | 3 | 3 |
| Amount of SBR (% by mass) | 25 | 15 | 100 | 25 | 25 |
| Amount of NR (% by mass) | 75 | 85 | 0 | 75 | 75 |
| Amount of carbon black (part by mass) | 10 | 10 | 10 | 10 | 10 |
| Amount of resin component (part by mass) | 5 | 5 | 5 | 0 | 5 |
| Tg of SBR (°C) T | -67 | -62 | -62 | -62 | -52 |
| 2G - T | 73 | 68 | 68 | 68 | 58 |
| Silica/CB ratio | 6.0 | 6.0 | 6.0 | 6.0 | 6.0 |
| Intermediate rubber layer | | | | | |
| Compounding formulation of rubber layer | x | x | x | x | x |
| Thickness of rubber layer (mm) | 2 | 2 | 2 | 2 | 2 |
| Base rubber layer | | | | | |
| Compounding formulation of rubber layer | y | y | y | y | y |
| Thickness of rubber layer (mm) | 2 | 2 | 2 | 2 | 2 |
| Chipping resistance | 125 | 95 | 75 | 85 | 75 |

<Embodiments>

Preferred embodiments are described below.

[1] A tire comprising a tread part that comprises at least one rubber layer,

wherein the rubber layer constitutes a tread surface,
wherein the rubber layer is composed of a rubber composition comprising a rubber component, a filler, and a resin component,
wherein the rubber component comprises

20% by mass or more, preferably 25% by mass or more, more preferably more than 30% by mass, further preferably more than 35% by mass of a styrene-butadiene rubber, and
an isoprene-based rubber,

wherein the filler comprises carbon black, and
wherein T and G satisfy the following inequality (1),

EP 4 338 980 A1

$$2G - T \geq 70 \quad (1),$$

(provided that T is lower than -50),

where a glass transition temperature, in °C, of the styrene-butadiene rubber is referred to as T and a thickness, in mm, of the rubber layer is referred to as G.

[2] The tire of [1] above, wherein the right side of the inequality (1) is 75.

[3] The tire of [1] above, wherein the right side of the inequality (1) is 80, preferably 85, further preferably 90.

[4] The tire of any one of [1] to [3] above, wherein G is less than 30, preferably less than 20, more preferably 16 or less, further preferably 15 or less, further preferably less than 14 or less.

[5] The tire of any one of [1] to [3] above, wherein G is 8 or less, preferably 7 or less.

[6] The tire of any one of [1] to [5] above, wherein T is lower than - 54, preferably -55 or lower.

[7] The tire of any one of [1] to [5] above, wherein T is -60 or lower, preferably lower than -65.

[8] The tire of any one of [1] to [7] above, wherein a content of the carbon black based on 100 parts by mass of the rubber component is greater than 1 part by mass, preferably greater than 3 parts by mass, more preferably greater than 5 parts by mass.

[9] The tire of any one of [1] to [8] above, wherein a total content of the styrene-butadiene rubber and the isoprene-based rubber in the rubber component is greater than 70% by mass, preferably greater than 80% by mass, more preferably greater than 90% by mass, further preferably greater than 95% by mass.

[10] The tire of any one of [1] to [9] above, wherein a content of the resin component based on 100 parts by mass of the rubber component is greater than 1 part by mass, preferably greater than 3 parts by mass, more preferably greater than 4 parts by mass, further preferably 5 parts by mass or more.

[11] The tire of any one of [1] to [10] above,

wherein the filler comprises silica, and

wherein a content ratio of a mass of the silica to a mass of the carbon black is greater than 1.0, preferably greater than 2.0, further preferably greater than 3.0, further preferably greater than 4.0, further preferably greater than 5.0.

[12] The tire of any one of [1] to [11] above, wherein a content of the filler based on 100 parts by mass of the rubber component is greater than 40 parts by mass, preferably greater than 50 parts by mass, more preferably greater than 60 parts by mass, further preferably 70 parts by mass or more.

[13] The tire of any one of [1] to [12] above, wherein the tread part comprises three or more rubber layers.

[14] The tire of any one of [2] and [5] to [13] above, wherein the tire is used for a passenger car.

[15] The tire of any one of [3], [4], and [6] to [13] above, wherein the tire is used for a heavy-duty vehicle.

REFERENCE SIGNS LIST

1       Tire
2       Tread part
3       Cap rubber layer
4       Base rubber layer
G       Thickness of cap rubber layer
R       Rim
EP      Tire equatorial plane

**Claims**

1.  A tire comprising a tread part that comprises at least one rubber layer,

    wherein the rubber layer constitutes a tread surface,
    wherein the rubber layer is composed of a rubber composition comprising a rubber component, a filler, and a resin component,
    wherein the rubber component comprises

20% by mass or more of a styrene-butadiene rubber, and an isoprene-based rubber,
wherein the filler comprises carbon black, and
wherein T and G satisfy the following inequality (1),

$$2G - T \geq 70 \quad (1),$$

(provided that T is lower than -50),
where a glass transition temperature, in °C, of the styrene-butadiene rubber is referred to as T and a thickness, in mm, of the rubber layer is referred to as G.

2. The tire of claim 1, wherein the right side of the inequality (1) is 75.

3. The tire of claim 1, wherein t the right side of the inequality (1) is 80.

4. The tire of any one of claims 1 to 3, wherein G is 15 or less.

5. The tire of any one of claims 1 to 3, wherein G is 7 or less.

6. The tire of any one of claims 1 to 5, wherein T is lower than -54.

7. The tire of any one of claims 1 to 5, wherein T is -60 or lower.

8. The tire of any one of claims 1 to 7, wherein a content of the carbon black based on 100 parts by mass of the rubber component is greater than 5 parts by mass.

9. The tire of any one of claims 1 to 8, wherein a total content of the styrene-butadiene rubber and the isoprene-based rubber in the rubber component is greater than 70% by mass.

10. The tire of any one of claims 1 to 9, wherein a content of the resin component based on 100 parts by mass of the rubber component is greater than 1 part by mass.

11. The tire of any one of claims 1 to 10,

    wherein the filler comprises silica, and
    wherein a content ratio of a mass of the silica to a mass of the carbon black is greater than 1.0.

12. The tire of any one of claims 1 to 11, wherein a content of the filler based on 100 parts by mass of the rubber component is greater than 50 parts by mass.

13. The tire of any one of claims 1 to 12, wherein the tread part comprises three or more rubber layers.

14. The tire of any one of claims 2 and 5 to 13, wherein the tire is used for a passenger car.

15. The tire of any one of claims 3, 4, and 6 to 13, wherein the tire is used for a heavy-duty vehicle.

# FIG.1

Europäisches
Patentamt

European
Patent Office

Office européen
des brevets

# EUROPEAN SEARCH REPORT

Application Number

EP 23 19 5855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 296 080 A1 (SUMITOMO RUBBER IND [JP]) 27 December 2023 (2023-12-27) * paragraph [0006] – paragraph [0007] * * example 3; table 1 * * paragraph [0169] * * paragraph [0173] * | 1,2,4-7, 9-15 | INV. B60C1/00 C08L7/00 C08L9/06 |
| A | WO 2022/024933 A1 (SUMITOMO RUBBER IND [JP]) 3 February 2022 (2022-02-03) * page 1 * * example experiment 1 * | 1-15 | |
| A | JP 2004 051774 A (SHIRAISHI KOGYO KAISHA LTD; SHIRAISHI CHUO KENKYUSHO KK) 19 February 2004 (2004-02-19) * page 1 * * paragraph [0073] – paragraph [0084] * * examples 1-3; table 1 * | 1-15 | |
| A | CN 112 375 264 A (WANLI TIRE CORP LTD) 19 February 2021 (2021-02-19) * page 1 * * figure 1 * * example 1 * * claims 1-7 * | 1-15 | TECHNICAL FIELDS SEARCHED (IPC) B60C C08L |

The present search report has been drawn up for all claims

| Place of search | Date of completion of the search | Examiner |
|---|---|---|
| Munich | 26 January 2024 | Laïb, Samia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 5855

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2024

| Patent document cited in search report | | | Publication date | Patent family member(s) | | | Publication date |
|---|---|---|---|---|---|---|---|
| EP 4296080 | A1 | | 27-12-2023 | CN | 117285761 | A | 26-12-2023 |
| | | | | EP | 4296080 | A1 | 27-12-2023 |
| | | | | JP | 2024002391 | A | 11-01-2024 |
| | | | | US | 2023415516 | A1 | 28-12-2023 |
| WO 2022024933 | A1 | | 03-02-2022 | CN | 116137844 | A | 19-05-2023 |
| | | | | EP | 4190590 | A1 | 07-06-2023 |
| | | | | JP | 6861954 | B1 | 21-04-2021 |
| | | | | JP | 2022024799 | A | 09-02-2022 |
| | | | | JP | 2022024983 | A | 09-02-2022 |
| | | | | US | 2023286321 | A1 | 14-09-2023 |
| | | | | WO | 2022024933 | A1 | 03-02-2022 |
| JP 2004051774 | A | | 19-02-2004 | NONE | | | |
| CN 112375264 | A | | 19-02-2021 | NONE | | | |

EPO FORM P0459

For more details about this annex : see Official Journal of the European Patent Office, No. 12/82

**EP 4 338 980 A1**

**REFERENCES CITED IN THE DESCRIPTION**

**Patent documents cited in the description**

- JP 2018188567 A